# EUROPÄISCHE PATENTSCHRIFT

(11) **EP 3 072 571 B1**
(45) Veröffentlichungstag und Bekanntmachung des Hinweises auf die Patenterteilung: **31.05.2017**
(21) Anmeldenummer: 16154004.2
(22) Anmeldetag: 03.02.2016
(51) Int. Cl.: B01D 46/10, B01D 46/52, B01D 46/00

(54) **FLEXIBLES FILTERELEMENT MIT EINEM SPRITZGUSSTECHNISCH ANGEFORMTEN RAHMEN AUS KUNSTSTOFF**
FLEXIBLE FILTER ELEMENT WITH AN INJECTION MOULDED FRAME MADE OF PLASTIC
ÉLEMENT DE FILTRE FLEXIBLE COMPRENANT UN CADRE MOULE EN PLASTIQUE SELON UNE TECHNIQUE DE MOULAGE PAR INJECTION

(30) Priorität: 26.03.2015 EP 15161059
(43) Veröffentlichungstag der Anmeldung: 28.09.2016
(73) Patentinhaber: Carl Freudenberg KG, 69469 Weinheim (DE)
(72) Erfinder: Capuani, Peter, 69483 Waldmichelbach (DE); Stößer, Thomas, 68519 Viernheim (DE); Starec, Tomas, 06901 Snina (SK)

(56) Entgegenhaltungen:
- WO-A1-02/13947
- DE-A1- 4 327 368
- DE-A1-102008 058 237
- DE-A1-102010 053 744
- KR-B1- 100 720 763

## Beschreibung

### Technisches Gebiet

Die Erfindung betrifft ein Filterelement gemäß dem Oberbegriff des Patentanspruchs 1.

### Stand der Technik

Aus der EP 2 133 550 A2 ist ein Filterelement mit einer umlaufenden Dichtung bekannt, wobei die Dichtung aus zwei Komponenten aus Kunststoffen besteht. Die Dichtung ist allerdings derart steif oder spröde, dass eine definierte flexible Verbiegung des Filterelements nicht möglich ist.

Insbesondere ist ein Filterelement bekannt geworden, bei denen weiche Rahmenkomponenten durch Zweikomponenten-Polyurethan-Systeme geschaffen sind. Diese Rahmenkomponenten besitzen eine integrierte Dichtfunktion gegenüber Gehäusen, in welche das Filterelement eingebaut werden soll. Die Biegeeigenschaften dieses Filterelements sind allerdings über dessen Umfang konstant.

Um ein Filterelement in ein Filtergehäuse einzuführen, ist es aber häufig notwendig, dieses definiert zu verbiegen.

Vor diesem Hintergrund sind Filterelemente mit gefalteten Filtermedien bekannt, deren Rahmung aus einem aufgeklebten Vliesstoff besteht. Hier lassen sich unterschiedliche Biegeeigenschaften dadurch einstellen, dass man Vliesstoffmaterialien unterschiedlicher Steifigkeiten verwendet. Den Anforderungen an die Biegsamkeit wird bei Filterelementen, die mit Vliesstoff gerahmt sind, dadurch begegnet, dass starre oder weiche Vliesstoffe mit dem Filtermedium verklebt werden.

Zwar sind schon Filterelemente bekannt, deren Faltenkanten mit Rahmen aus Vliesstoffen gesäumt sind, jedoch besteht ein Bedarf nach kostengünstiger herstellbaren Filterelementen mit Rahmen aus angespritztem Kunststoff.

Filterelemente, die mit einem spritzgusstechnisch hergestellten Rahmen versehen sind, müssen die zuvor genannten Biegeeigenschaften an bestimmten Stellen auch aufweisen, damit diese problemlos in Gehäuse hineingeschoben oder in diesen verbaut werden können.

Diesem Bedarf liegen steigende Anforderungen an die Flexibilität von Filterelementen zugrunde. Ein ausreichend flexibel biegbares Filterelement ist leicht verbaubar und kann mit relativ wenigen Arbeitsschritten beispielsweise in den Schacht einer Klimaanlage eingeführt werden.

Vor diesem Hintergrund sind zwar schon Filterelemente bekannt, welche gefaltete Filtermedien aufweisen und mit einer Spritzgussrahmung versehen sind. Es existieren Ausführungsformen, deren Rahmen vollständig umlaufend ausgebildet ist. Es existieren auch Ausführungsformen, bei welchen der Rahmen mit einer zusätzlichen Dichtung aus einem weichen Kunststoff versehen ist, welche auf einen steifen Rahmen aufgespritzt ist. Hierdurch wird das Filterelement in einem Gehäuse abgedichtet.

Aus der DE 10 2007 063 252 A1 sind Filterelemente mit Rahmen bekannt, die spritzgusstechnisch herstellbar sind. Diese Filterelemente weisen gefaltete Filtermedien auf, die mit einem Rahmen versehen sind. Der Rahmen weist Lücken zwischen den Faltenkanten auf. Dies ist in Fig. 1 dargestellt, welche aus der DE 10 2007 063 252 A1 entnommen ist.

Der Rahmen weist im Bereich der Lücken Dünnstellen auf, welche im Belastungsfall als Scharnier, insbesondere als Filmscharnier, wirken. Das Filterelement ist um die Achsen zwischen den gegenüberliegenden Dünnstellen biegbar.

Die gegenüberliegenden Dünnstellen haben den Nachteil, dass sie aufgrund der Einbindung des Filtermediums als Scharnier relativ ungeeignet sind, nämlich im Belastungsfall häufig brechen. Dies führt zu Undichtigkeiten im System Filterelement-Gehäuse. Überdies sind Filterelemente schlecht abdichtbar, welche Rahmen mit Lücken aufweisen.

Aus der DE 10 2007 063 252 A1 ist es konkret bekannt, Filmscharniere zu verwenden. Die technische Voraussetzung für ein Filmscharnier ist aber die Schaffung einer Dünnstelle mit einer Materialstärke von wenigen Zehntel Millimetern.

In der Regel beträgt die Materialstärke 0,3 bis 0,35 mm. Da ein Filtermedium bei einem spritzgusstechnisch hergestellten Filterelement von einem Rahmen aus einem Kunststoff umschlossen ist, ist die technische Anforderung für ein Filmscharnier nur schwer umzusetzen. Es wird nämlich üblicherweise die Materialstärke bei der Schaffung des Rahmens überschritten.

Bei einem Filterelement zur Filterung von Partikeln würde eine Materialstärke des Filmscharniers von 0,6 bis 0,7 mm entstehen. Hierdurch wären die Biegsamkeit und Flexibilität des Filmscharniers und dessen Lebensdauer eingeschränkt. Dies würde zu Materialbruch führen, welcher in einer Undichtigkeit des Filterelements im Gehäuse resultiert.

Bei einem Kombifilterelement ist ein Filmscharnier nicht realisierbar, da die Materialstärke bei ca. 1,5 mm liegt und schwankend ist.

Für viele Anwendungsfälle müssen die Filterelemente jedoch an bestimmten Stellen biegbar sein, damit sie in ein Gehäuse eingebaut werden können. Nur aufgrund einer bestimmten Biegsamkeit lassen sich die Filterelemente in eine jeweilige Montageöffnung eines Gehäuses einbringen. An anderen Stellen muss der Rahmen eines Filterelements aber ausreichend hart sein, um eine geforderte Festigkeit des Filterelements im Betrieb sicherzustellen.

### Darstellung der Erfindung

Der Erfindung liegt daher die Aufgabe zugrunde, ein flexibel biegbares Filterelement bereit zu stellen, welches mit einem Rahmen aus spritzgusstechnisch angebrachtem Kunststoff versehen ist.

Die vorliegende Erfindung löst die zuvor genannte Aufgabe durch die Merkmale des Patentanspruchs 1.

Ein Filterelement zum Einsetzen in ein Filtergehäuse gemäß Patentanspruch 1 umfasst ein Filtermedium mit einem Rand, wobei der Rand mit einem spritzgusstechnisch gefertigten Rahmen oder mindestens einem spritzgusstechnisch gefertigten Rahmenelement verbunden ist.

Der Rahmen oder mindestens ein Rahmenelement ist in mindestens einer Erstreckungsrichtung derart abwechselnd aus unterschiedlich harten Kunststoffen gefertigt, dass das Filterelement unter Deformierung des Filtermediums und des Rahmens oder Rahmenelements zumindest teilweise flexibel verbiegbar ist. Das Filterelement ist daher geeignet, in ein Filtergehäuse eingeführt zu werden und in diesem wieder seine Form vor der Deformierung anzunehmen. Das Filterelement ist zerstörungsfrei deformierbar.

Erfindungsgemäß ist zunächst erkannt worden, dass Filterelemente in Spritzgusswerkzeugen gefertigt werden können. Die Spritzgusswerkzeuge erlauben die Durchführung eines zweistufigen Spritzgussprozesses, bei dem verschiedene Kunststoffe, insbesondere Thermoplaste, Elastomere oder thermoplastische Elastomere, eingesetzt werden.

Weiter ist erkannt worden, dass mit einem weicheren Kunststoff eine gute Einbindung des verwendeten Filtermediums in diesen Kunststoff möglich ist.

Es ist auch erkannt worden, dass ein Rahmen oder Rahmenelement über einen weichen Rahmenbereich verfügt, der bei geeigneter Kunststoffauswahl eine Dichtfunktion entfalten kann. Die Dichtfunktion ist dann in das Rahmenelement integriert. Das Filterelement kann in einem einzigen vollautomatisierten Spritzgussverfahren ohne weitere Nachbearbeitungsschritte hergestellt werden.

Nach der Herstellung weist das Filterelement alle geforderten Eigenschaften auf. Nachbearbeitungsschritte wie beispielsweise das Aufkleben einer Dichtung können entfallen. Das erfindungsgemäße Filterelement kann verschiedenste Biegeradien annehmen, indem man die Härte der Kunststoffe entsprechend einstellt. Durch weichere Rahmenbereiche eines Rahmens oder Rahmenelements werden definiert Stellen geschaffen, an denen der Rahmen oder das Rahmenelement gemeinsam mit dem Filtermedium leicht knickbar oder biegbar ist.

Folglich ist die genannte Aufgabe gelöst.

An einen oder mehrere Rahmenbereiche des Rahmens oder Rahmenelements aus härterem Kunststoff könnte sich ein Rahmenbereich aus weicherem Kunststoff anschließen, wobei der Rahmenbereich aus weicherem Kunststoff eine Sollbiegestelle ausbildet. Das Filterelement ist durch die Ausbildung einer Sollbiegestelle definiert verbiegbar und kann unter Verbiegen in Gehäuse, insbesondere in Filtergehäuse, eingeführt werden.

Die unterschiedlich harten Kunststoffe könnten als Elastomere, thermoplastische Elastomere und/ oder Thermoplaste ausgestaltet sein. Elastomere und insbesondere thermoplastische Elastomere sind als Scharniermaterialien zur Herstellung von Filterelementen besonders geeignet. Üblicherweise wird ein thermoplastisches Elastomer als Dichtungsmaterial in einem Zweikomponenten-Spritzgussverfahren eingesetzt. Es werden die Vorteile des Spritzgussverfahrens mit den Vorteilen eines flexiblen Filterelements verbunden. Spritzgussverfahren sind zur Herstellung komplexer Geometrien geeignet.

Der Rahmen oder das Rahmenelement könnte daher an den Sollbiegestellen, an denen er oder es biegsam ausgestaltet ist, als Kunststoff ein thermoplastisches Elastomer aufweisen. Vorteilhaft ist der Rahmen oder das Rahmenelement an den Stellen, an denen er oder es biegsam gestaltet sein soll, durch ein Zweikomponenten-Spritzgussverfahren aus einem thermoplastischen Elastomer hergestellt. Dieses Elastomer füllt die Räume zwischen Faltenkanten bei Verwendung eines Faltenbalgs vollständig aus, bindet nämlich die Faltenkanten ebenso zuverlässig ein wie harte Polymere. Das Filterelement ist an definierten Stellen flexibel.

Durch Einstellung der Anzahl der mit thermoplastischem Elastomer ausgefüllten Räume und Auswahl der Härte des eingesetzten Materials kann die Flexibilität eingestellt werden. Eine Parallelität und Beabstandung der Falten bleibt auch im gebogenen Zustand des Filterelements weitgehend konstant.

Die unterschiedlich harten Kunststoffe könnten miteinander stoffschlüssig verzahnt oder verbunden sein. Die Phasenübergänge zwischen den verschiedenen Kunststoffen können durch eine Verzahnung bewirkt werden. Hierdurch ist eine gute Haftung der unterschiedlichen Kunststoffe miteinander sowie zu den verwendeten Filtermedien ermöglicht. Eine Zweiphasen-Spritzgusstechnik ist vorteilhaft für Filterelemente dahingehend erweitert, dass man gezahnte Rahmungsteile mit unterschiedlichen Kunststoffen ausbilden kann.

Das hier beschriebene Filterelement könnte vor diesem Hintergrund durch ein Zweikomponenten-Spritzgussverfahren hergestellt sein. Es wird nicht nur wie bisher ein zweiter weicherer Kunststoff umlaufend auf einen ersten härteren Kunststoff aufgespritzt, wie dies aus dem Stand der Technik bereits bekannt ist. Das Filterelement ist trotz spritzgusstechnischer Fertigung nicht teurer als ein kantengeleimtes Filterelement, bei welchem Vliesstoffe zum Einsatz kommen.

Am Rahmen oder an mindestens einem Rahmenelement könnte eine Dichtlippe angeordnet sein. Hierdurch ist das Filterelement gegen eine Gehäusewand abdichtbar.

Das Filtermedium könnte einen Faltenbalg mit Faltenspitzen und Faltenkanten umfassen, wobei der Rahmen oder mindestens ein Rahmenelement zumindest abschnittsweise mit den Faltenkanten verbunden ist. Ein Faltenbalg stellt eine besondere große Filterfläche auf engem Raum zur Verfügung.

Der Faltenbalg könnte Aktivkohle oder andere adsorbierende Stoffe aufweisen. Hierdurch ist das Filterelement als Kombifilterelement ausgestaltet, welches nicht nur Staubpartikel filtert, sondern auch Stoffe physikalisch bindet.

Das hier beschriebene Filterelement stellt insbesondere für Partikelfilterelemente eine Verbesserung dar. Des Weiteren ist eine Flexibilität und Biegbarkeit bei Kombifilterelementen, welche spritzgusstechnisch hergestellt sind, realisierbar. Es wird eine Flexibilität und Biegsamkeit geschaffen, die durch ein Filmscharnier nicht herstellbar wäre.

Vor diesem Hintergrund ist auch denkbar, ein rechteckiges Filterelement derart auszubilden, dass dessen Faltenbalg an zwei Seiten mit einem starren und an zwei Seiten mit einem weichen einkomponentigen Kunststoff umspritzt ist.

Das hier beschriebene Filterelement kann auch eine nicht-rechteckige Geometrie aufweisen. So kann es in entsprechend ausgeformte Gehäuse eingesetzt werden.

Das hier beschriebene Filterelement kann in Kraftfahrzeugen oder in Klimaanlagen verwendet werden.

### Kurzbeschreibung der Zeichnung

In der Zeichnung zeigen
- Fig. 1: ein Rahmenelement des Stands der Technik, welches Lücken und Dünnstellen aufweist,
- Fig. 2: ein Rahmenelement, bei welchem einige Rahmenbereiche aus einem härteren und einige Rahmenbereiche aus einem weicheren Kunststoff gefertigt sind,
- Fig. 3: ein Filterelement mit dem Rahmenelement gemäß Fig. 2 und
- Fig. 4: ein Filterelement, bei welchem je zwei gegenüberliegende Rahmenbereiche eines Rahmens als starre und flexible Rahmenbereiche ausgebildet sind, im verbogenen Zustand und im nicht verbogenen Zustand.

### Ausführung der Erfindung

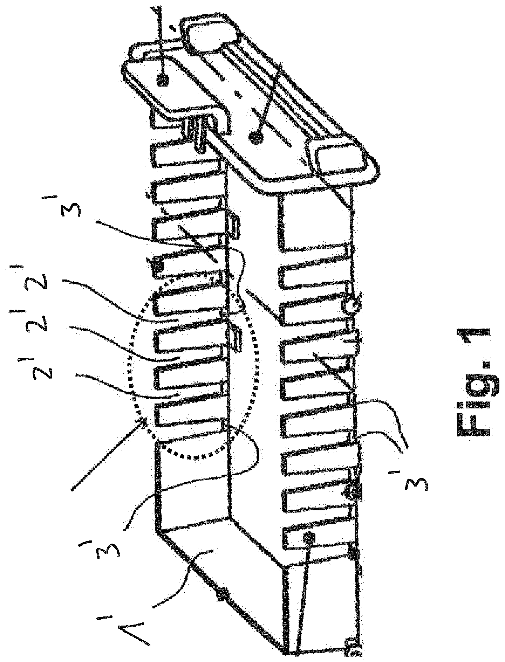

Fig. 1 zeigt ein Rahmenelement 1' des Stands der Technik, welches Lücken 2' und Dünnstellen 3' aufweist.

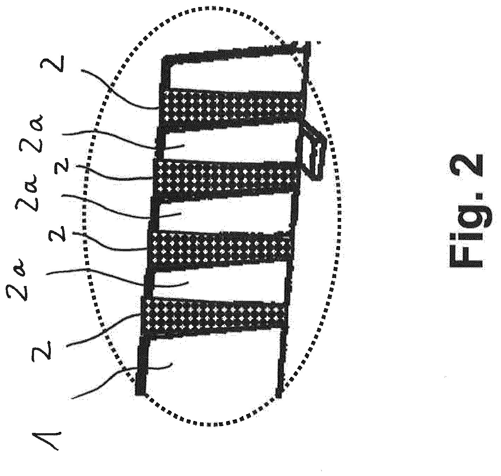

Fig. 2 zeigt ein Rahmenelement 1, bei welchem einige Rahmenbereiche 2a aus einem härteren und einige Rahmenbereiche 2 aus einem weicheren Kunststoff gefertigt sind..

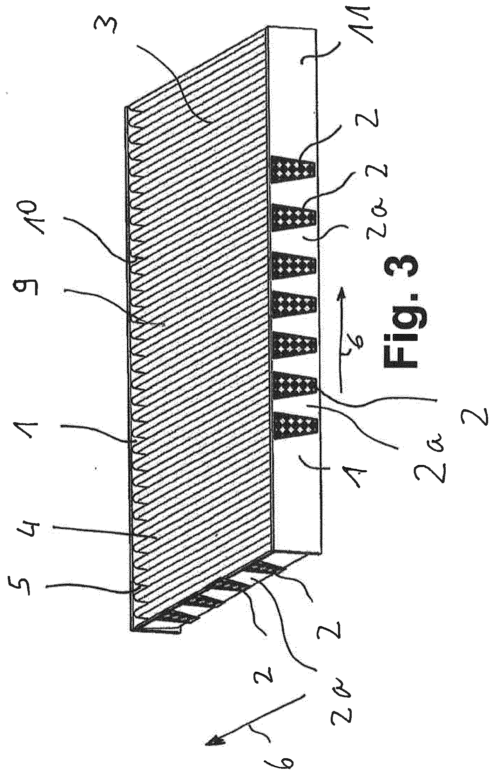

Fig. 3 zeigt ein Filterelement zum Einsetzen in ein Filtergehäuse, umfassend ein Filtermedium 9 mit einem Rand 10, wobei der Rand 10 mit mindestens einem spritzgusstechnisch gefertigten Rahmenelement 1 verbunden ist.

Das Rahmenelement 1 ist in mindestens einer Erstreckungsrichtung 6 derart abwechselnd aus unterschiedlich harten Kunststoffen gefertigt, dass das Filterelement unter Deformierung des Filtermediums 9 und des Rahmenelements 1 zumindest teilweise flexibel verbiegbar ist.

An einen oder mehrere Rahmenbereiche 2a des Rahmenelements 1 aus härterem Kunststoff schließt sich ein Rahmenbereich 2 aus weicherem Kunststoff an, wobei der Rahmenbereich 2 aus weicherem Kunststoff eine Sollbiegestelle ausbildet.

Die unterschiedlich harten Kunststoffe könnten als Elastomere, thermoplastische Elastomere oder Thermoplaste ausgestaltet sein. Das Rahmenelement 1 könnte an den Sollbiegestellen, an denen es biegsam ausgestaltet ist, als Kunststoff ein thermoplastisches Elastomer aufweisen.

Die unterschiedlich harten Kunststoffe sind miteinander stoffschlüssig verbunden.

Das Filterelement ist in einem Zweikomponenten-Spritzgussverfahren hergestellt.

Das Filtermedium 9 umfasst einen Faltenbalg 3 mit Faltenspitzen 4 und Faltenkanten 5, wobei mindestens ein Rahmenelement 1 zumindest abschnittsweise mit den Faltenkanten 5 verbunden ist.

Konkret umgeben vier Rahmenelemente 1 den rechteckigen Faltenbalg 3 an allen vier Seiten. Die Rahmenelemente 1 sind hier umlaufend und in sich geschlossen als ein Rahmen 11 ausgebildet. Ein jedes Rahmenelement 1 ist in mindestens einer Erstreckungsrichtung 6 derart abwechselnd aus unterschiedlich harten Kunststoffen aufgebaut, dass das Rahmenelement 1 längs und/ oder quer zu seiner Erstreckung flexibel biegbar ist. Es wechseln sich Rahmenbereiche 2, 2a aus unterschiedlich harten Kunststoffen in einer Erstreckungsrichtung 6 ab.

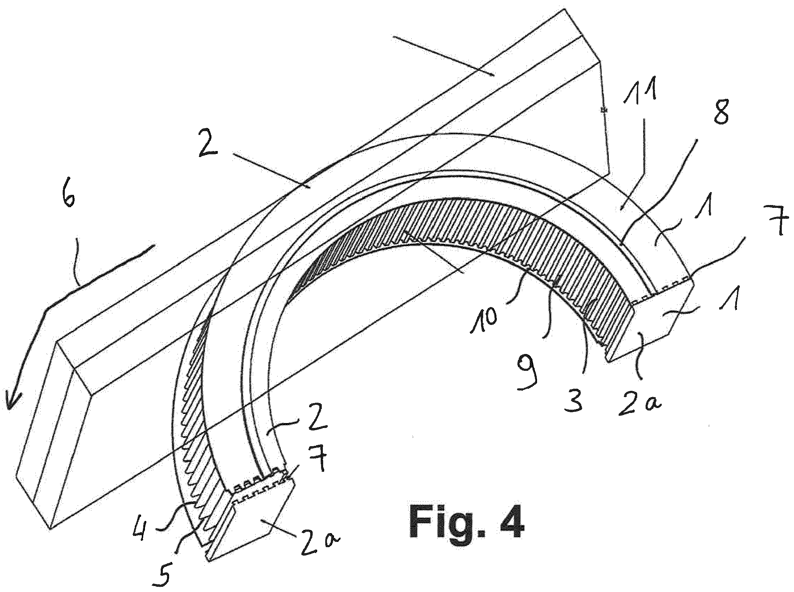

Fig. 4 zeigt ein Filterelement zum Einsetzen in ein Filtergehäuse, umfassend ein Filtermedium 9 mit einem Rand 10, wobei der Rand 10 mit einem spritzgusstechnisch gefertigten Rahmen 11 oder mindestens einem spritzgusstechnisch gefertigten Rahmenelement 1 verbunden ist. Hier sind die Rahmenelemente 1 als Rahmenbereiche 2, 2a ausgestaltet.

Der Rahmen 11 ist in mindestens einer Erstreckungsrichtung 6, nämlich in Umfangsrichtung, derart abwechselnd aus unterschiedlich harten Kunststoffen gefertigt, dass das Filterelement unter Deformierung des Filtermediums 9 und des Rahmens 11 zumindest teilweise flexibel verbiegbar ist.

An einen Rahmenbereich 2a des Rahmens 11 aus härterem Kunststoff schließt sich ein Rahmenbereich 2 aus weicherem Kunststoff an, wobei der Rahmenbereich 2 aus weicherem Kunststoff eine Sollbiegestelle ausbildet.

Die unterschiedlich harten Kunststoffe sind als thermoplastische Elastomere und Thermoplaste ausgestaltet. Die Rahmenbereiche 2a sind aus einem Thermoplasten gefertigt. Die Rahmenbereiche 2 sind aus flexiblem thermoplastischem Elastomer gefertigt.

Der Rahmen 11 weist insoweit an den Sollbiegestellen, an denen er biegsam ausgestaltet ist, als Kunststoff ein thermoplastisches Elastomer auf.

Die zuvor genannten unterschiedlich harten Kunststoffe sind miteinander stoffschlüssig verzahnt.

Das Filterelement ist in einem Zweikomponenten-Spritzgussverfahren hergestellt.

Am Rahmen 11 ist eine Dichtlippe 8 angeordnet.

Das Filtermedium 9 umfasst einen Faltenbalg 3 mit Faltenspitzen 4 und Faltenkanten 5, wobei der Rahmen 11 zumindest abschnittsweise mit den Faltenkanten 5 verbunden ist.

Fig. 4 zeigt konkret ein Filterelement zum Einsetzen in ein Filtergehäuse, umfassend einen Faltenbalg 3 mit Faltenspitzen 4 und Faltenkanten 5, wobei zwei längere Rahmenbereiche 2 zumindest abschnittsweise an den Faltenkanten 5 anliegen und mit diesen fest verbunden sind. Zwei kürzere Rahmenbereiche 2a sind mit dem Faltenbalg 3 ebenfalls fest verbunden.

Die längeren Rahmenbereiche 2 sind flexibel und aus einem ersten Kunststoff ausgebildet. Die kürzeren Rahmenbereiche 2a sind starr und aus einem weiteren zweiten Kunststoff ausgebildet.

Die unterschiedlichen Kunststoffe sind fest miteinander verbunden, bevorzugt durch eine sägezahnartig ausgebildete Verbindungsnaht 7.

In diesem Ausführungsbeispiel gemäß Fig. 4 weist der flexible Rahmenbereich 2 eine Dichtlippe 8 aus dem gleichen flexiblen Kunststoff auf, aus dem der Rahmenbereich 2 selbst gefertigt ist.

## Patentansprüche

1. Filterelement zum Einsetzen in ein Filtergehäuse, umfassend ein Filtermedium (9) mit einem Rand (10), wobei der Rand (10) mit einem spritzgusstechnisch gefertigten Rahmen (11) oder mindestens einem spritzgusstechnisch gefertigten Rahmenelement (1) verbunden ist, **dadurch gekennzeichnet, dass** der Rahmen (11) oder mindestens ein Rahmenelement (1) in mindestens einer Erstreckungsrichtung (6) derart abwechselnd aus unterschiedlich harten Kunststoffen gefertigt ist, dass das Filterelement unter Deformierung des Filtermediums (9) und des Rahmens (11) oder Rahmenelements (1) zumindest teilweise flexibel verbiegbar ist.

2. Filterelement nach Anspruch 1, **dadurch gekennzeichnet, dass** sich an einen oder mehrere Rahmenbereiche (2a) des Rahmens (11) oder Rahmenelements (1) aus härterem Kunststoff ein Rahmenbereich (2) aus weicherem Kunststoff anschließt, wobei der Rahmenbereich (2) aus weicherem Kunststoff eine Sollbiegestelle ausbildet.

3. Filterelement nach einem der voranstehenden Ansprüche, **dadurch gekennzeichnet, dass** die unterschiedlich harten Kunststoffe als Elastomere, thermoplastische Elastomere und/ oder Thermoplaste ausgestaltet sind.

4. Filterelement nach einem der voranstehenden Ansprüche, **dadurch gekennzeichnet, dass** der Rahmen (11) oder das Rahmenelement (1) an den Sollbiegestellen, an denen er oder es biegsam ausgestaltet ist, als Kunststoff ein thermoplastisches Elastomer aufweist.

5. Filterelement nach einem der voranstehenden Ansprüche, **dadurch gekennzeichnet, dass** die unterschiedlich harten Kunststoffe miteinander stoffschlüssig verzahnt oder verbunden sind.

6. Filterelement nach einem der voranstehenden Ansprüche, **gekennzeichnet durch** eine Herstellung in einem Zweikomponenten-Spritzgussverfahren.

7. Filterelement nach einem der voranstehenden Ansprüche, **dadurch gekennzeichnet, dass** am Rahmen (11) oder an mindestens einem Rahmenelement (1) eine Dichtlippe (8) angeordnet ist.

8. Filterelement nach Anspruch 1, **dadurch gekennzeichnet, dass** das Filtermedium (9) einen Faltenbalg (3) mit Faltenspitzen (4) und Faltenkanten (5) umfasst, wobei der Rahmen (11) oder mindestens ein Rahmenelement (1) zumindest abschnittsweise mit den Faltenkanten (5) verbunden ist.

9. Filterelement nach einem der voranstehenden Ansprüche, **dadurch gekennzeichnet, dass** der Faltenbalg (3) Aktivkohle oder andere adsorbierende Stoffe aufweist.

## Claims

1. Filter element to be inserted into a filter housing, comprising a filter medium (9) with a rim (10), wherein the rim (10) is connected to an injection-moulded frame (11) or at least one injection-moulded frame element (1), **characterized in that** the frame (11) or at least one frame element (1) is made of plastics of different harnesses in alternation in at least one direction of extent (6), such that the filter element can be bent flexibly at least in part by deforming the filter medium (9) and the frame (11) or frame element (1).

2. Filter element according to Claim 1, **characterized in that** a frame region (2) made of softer plastic adjoins one or more frame regions (2a) of the frame (11) or frame element (1) made of harder plastic, wherein the frame region (2) made of softer plastic forms a designated bending location.

3. Filter element according to either of the preceding claims, **characterized in that** the plastics of different harnesses take the form of elastomers, thermoplastic elastomers and/or thermoplastics.

4. Filter element according to one of the preceding claims, **characterized in that**, at the designated bending locations at which it is made to be bendable, the frame (11) or the frame element (1) has as plastic a thermoplastic elastomer.

5. Filter element according to one of the preceding claims, **characterized in that** the plastics of different hardnesses are mutually interlocked or connected in a material-bonded manner.

6. Filter element according to one of the preceding claims, **characterized by** production in a two-component injection-moulding process.

7. Filter element according to one of the preceding claims, **characterized in that** a sealing lip (8) is arranged on the frame (11) or on at least one frame element (1).

8. Filter element according to Claim 1, **characterized in that** the filter medium (9) comprises a bellows (3) with fold tips (4) and fold edges (5), wherein the frame (11) or at least one frame element (1) is connected at least in certain sections to the fold edges (5).

9. Filter element according to one of the preceding claims, **characterized in that** the bellows (3) has activated carbon or other adsorbent materials.

## Revendications

1. Élément de filtre pour l'insertion dans un boîtier de filtre, comprenant un milieu filtrant (9) avec un bord (10), le bord (10) étant connecté à un cadre (11) fabriqué par une technique de moulage par injection ou à moins un élément de cadre (1) fabriqué par une technique de moulage par injection,
**caractérisé en ce que** le cadre (11) ou au moins un élément de cadre (1) est fabriqué dans au moins une direction d'étendue (6) à partir d'une alternance de plastiques de différentes duretés de telle sorte que l'élément de filtre puisse être courbé de manière au moins en partie flexible par déformation du milieu filtrant (9) et du cadre (11) ou de l'élément de cadre (1).

2. Élément de filtre selon la revendication 1, **caractérisé en ce qu'**une région de cadre (2) en plastique plus souple se raccorde à une ou plusieurs régions de cadre (2a) du cadre (11) ou de l'élément de cadre (1) en plastique plus dur, la région de cadre (2) en plastique plus souple constituant une zone destinée à la flexion.

3. Élément de filtre selon l'une quelconque des revendications précédentes, **caractérisé en ce que** les plastiques de différentes duretés sont réalisés sous forme d'élastomères, d'élastomères thermoplastiques et/ou de matériaux thermoplastiques.

4. Élément de filtre selon l'une quelconque des revendications précédentes, **caractérisé en ce que** le cadre (11) ou l'élément de cadre (1) présente en tant que plastique un élastomère thermoplastique au niveau des zones destinées à la flexion au niveau desquelles il est configuré sous forme flexible.

5. Élément de filtre selon l'une quelconque des revendications précédentes, **caractérisé en ce que** les plastiques de différentes duretés sont imbriqués ou connectés les uns aux autres par liaison de matière.

6. Élément de filtre selon l'une quelconque des revendications précédentes, **caractérisé par** une fabrication suivant un procédé de moulage par injection à deux composants.

7. Élément de filtre selon l'une quelconque des revendications précédentes, **caractérisé en ce qu'**une lèvre d'étanchéité (8) est disposée au niveau du cadre (11) ou au niveau d'au moins un élément de cadre (1).

8. Élément de filtre selon la revendication 1, **caractérisé en ce que** le milieu filtrant (9) comprend un soufflet (3) avec des pointes de plis (4) et des arêtes de plis (5), le cadre (11) ou au moins un élément de cadre (1) étant raccordé au moins en partie aux arêtes de plis (5).

9. Élément de filtre selon l'une quelconque des revendications précédentes, **caractérisé en ce que** le soufflet (3) présente du charbon actif ou d'autres substances absorbantes.
